# EUROPEAN PATENT APPLICATION

(11) **EP 2 026 636 A2**
(43) Date of publication of application: **18.02.2009**
(21) Application number: 07253809.3
(22) Date of filing: 26.09.2007
(51) Int. Cl.: H05B 37/02

(54) **Illumination system**

(30) Priority: 30.07.2007 CN 200710137181
(71) Applicant: Topco Technologies Corp., Da-an District, Taipei City 106 (TW)
(72) Inventor: Tsai, Wen-Kuei, Sin-Jhuang City Taipei County (TW); Wang, Chun-Chien, Sijhih City Taipei County 221 (TW)
(74) Representative: Johnson, Terence Leslie

(57) **Abstract**

An illumination system (100) including a wireless communication unit (120), a light emitting diode (LED) light source (130), an image capture unit (140), and a control platform (110) is provided. The control platform (110) is electrically connected to the wireless communication unit (120), the LED light source (130), and the image capture unit (140). The above-mentioned illumination system (100) integrates the LED light source and other units via the control platform, so as to provide multiple functions, such as illumination, image capture, wireless communication and precaution to natural disaster.

## Description

### BACKGROUND OF THE INVENTION

### Field of the Invention

The present invention relates to an illumination system. More particularly, the present invention relates to an illumination system capable of providing multiple functions such as illumination, image capture, wireless communication and precaution to natural disaster.

### Description of Related Art

LEDs are semiconductor devices. The light emitting chips are mainly made of a compound semiconductor material containing III-V group chemical elements, for example, GaP, GaAs, and the like, and function on the principle of converting electric energy to light. That is to say, the compound semiconductor is powered to release excessive energy through the combination of electrons and holes, so as to emit photons (light). The LED can emit light without being heated or does not discharge to emit light. Therefore, the lifespan of the LED is up to 100,000 hours, and an idling time is not required. In addition, the LED has advantages of quick response speed (approximately 10⁻⁹ seconds), small volume, power-saving, low pollution, high reliability, and easy mass production. Thus, the LEDs have been intensively used in many fields, for example, light source and illumination device in large-scale bulletin boards, traffic lights, cellular phones, scanners, fax machines, etc.

Currently, the light emitting brightness and efficiency of the LEDs are continuously improved, and meanwhile the white LEDs with high brightness are successfully put into mass production, so the white LEDs have been gradually used in illumination devices such as the indoor illumination and outdoor street lamp. However, as for the outdoor street lamps, the LED street lamps are generally designed to have a simple illumination function instead of bringing other added values to the passers-by or administrators.

### SUMMARY OF THE INVENTION

The present invention is directed to provide an illumination system capable of providing multiple functions such as illumination, image capture, wireless communication and precaution to natural disaster.

The present invention provides an illumination system including a wireless communication unit, an LED light source, an image capture unit, and a control platform. The control platform is electrically connected to the wireless communication unit, the LED light source, and the image capture unit.

In an embodiment of the present invention, the wireless communication unit includes a 3 generation (3G) global system for mobile communications (GSM), a 3.5 generation (3.5G) global system for mobile communications (GSM), a 4 generation (4G) global system for mobile communications (GSM), a worldwide interoperability for microwave access (WiMAX), a personal handy-phone system (PHS), or an analog wireless transmission system.

In an embodiment of the present invention, the image capture unit includes a charge coupled device (CCD) or a complementary metal-oxide semiconductor (CMOS) image sensor.

In an embodiment of the present invention, the control platform is adapted for enabling the LED light source to emit light or enabling the image capture unit to capture images.

In an embodiment of the present invention, the control platform is adapted for enabling the wireless communication unit to transmit an image captured by the image capture unit to a remote control center.

In an embodiment of the present invention, the illumination system further includes a power supply unit electrically connected to the image capture unit, the LED light source, the wireless communication unit, and the control platform.

In an embodiment of the present invention, the power supply unit includes a DC power supply unit or an AC power supply unit.

In an embodiment of the present invention, the DC power supply unit includes a solar cell.

In an embodiment of the present invention, the power supply unit includes a DC power supply unit and an AC power supply unit.

In an embodiment of the present invention, the DC power supply unit includes a solar cell.

In an embodiment of the present invention, the illumination system further includes a global positioning system (GPS) unit electrically connected to the control platform.

In an embodiment of the present invention, the control platform is adapted for enabling the wireless communication unit to transmit a position information to a remote control center according to the position information detected by the GPS unit.

The present invention integrates the image capture unit, the LED light source, and the wireless communication unit into the same illumination system via the control platform, so the illumination system is capable of providing multiple functions such as illumination, image capture, wireless communication, and precaution to natural disaster, so as to bring many added values to the users.

In order to make the aforementioned and other objectives, features and advantages of the present invention comprehensible, preferred embodiments accompanied with figures are described in detail below.

It is to be understood that both the foregoing general description and the following detailed description are exemplary, and are intended to provide further explanation of the invention as claimed.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIG. 1 is a schematic view of an illumination system according to a first embodiment of the present invention.

FIG. 2 is a schematic view of an illumination system according to a second embodiment of the present invention.

FIG. 3 is a schematic view of an illumination system according to a third embodiment of the present invention.

### DESCRIPTION OF EMBODIMENTS

[The First Embodiment]

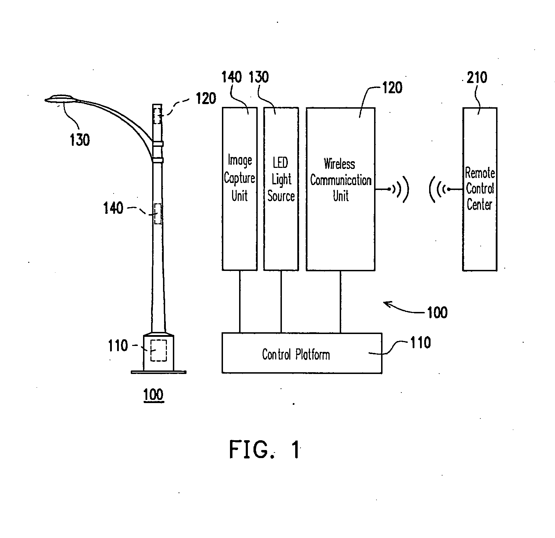

FIG. 1 is a schematic view of an illumination system according to a first embodiment of the present invention. Referring to FIG 1, the illumination system 100 in this embodiment includes a wireless communication unit 120, an LED light source 130, an image capture unit 140, and a control platform 110. The control platform 110 is electrically connected to the wireless communication unit 120, the LED light source 130, and the image capture unit 140. The control platform 110 integrates the wireless communication unit 120, the LED light source 130, and the image capture unit 140 into the illumination system 100, so as to provide more abundant and practical functions.

In this embodiment, the wireless communication unit 120 includes a 3 generation (3G) global system for mobile communications (GSM), a 3.5 generation (3.5G) global system for mobile communications (GSM), a 4 generation (4G) global system for mobile communications (GSM), a worldwide interoperability for microwave access (WiMAX), a personal handy-phone system (PHS), or an analog wireless transmission system. The image capture unit 140 includes a charge coupled device (CCD) or a complementary metal-oxide semiconductor (CMOS) image sensor.

For example, if the illumination system 100 of this embodiment is applied to a street lamp with multiple functions, as shown at the left side of FIG. 1, the appearance will have various alternations. The above control platform 110 may enable the LED light source 130 to emit light so as to realize the illumination function, or enable the image capture unit 140 to capture images so as to perform the monitoring function. In other embodiments of the present invention, the LED light source 130 is adapted for emitting infrared ray for capturing images by the image capture unit 140 at a long distance. Moreover, the LED light source 130 also provides a flash light for capturing images by the image capture unit 140 in a short time. Also, the above control platform 110 may enable the wireless communication unit 120 to transmit the images captured by the image capture unit 140 to a remote control center 210. Since the illumination system 100 (street lamp) has a remote monitoring function, the remote control center 210 can perform monitoring of various fixed positions simultaneously in a large range. In view of the above, the illumination system 100 is not only a street lamp, but also an anti-theft tool.

[The Second Embodiment]

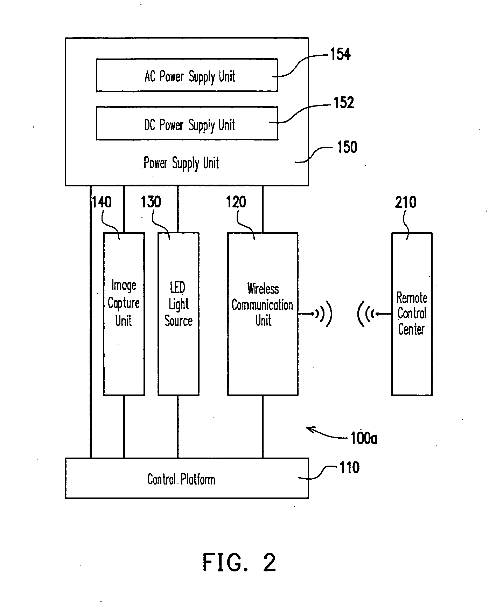

FIG. 2 is a schematic view of an illumination system according to a second embodiment of the present invention. Referring to FIG. 2, the illumination system 100a of this embodiment is similar to the illumination system 100 in the first embodiment, except for the difference that, the illumination system 100a further includes a power supply unit 150 electrically connected to the image capture unit 140, the LED light source 130, the wireless communication unit 120, and the control platform 110. The above power supply unit 150 includes a DC power supply unit 152 or an AC power supply unit 154 or both. The DC power supply unit 152 includes a solar cell 152a.

For example, if the illumination system 100a of this embodiment is applied to a street lamp with multiple functions, and is equipped with the solar cell 152a, the solar cell 152a converts the sunlight into electrical power to supply to the electronic devices such as the control platform 110, the wireless communication unit 120, the LED light source130, and the image capture unit 140 in the illumination system 100a, and thus the illumination system 100 has a thorough or partial self-supplying power efficacy. Therefore, the illumination system 100 is widely used due to the factors such as environmental protection and energy saving, and also suitable for the places where the electric system is unavailable, such as remote mountain areas or off-shore islands.

[The Third Embodiment]

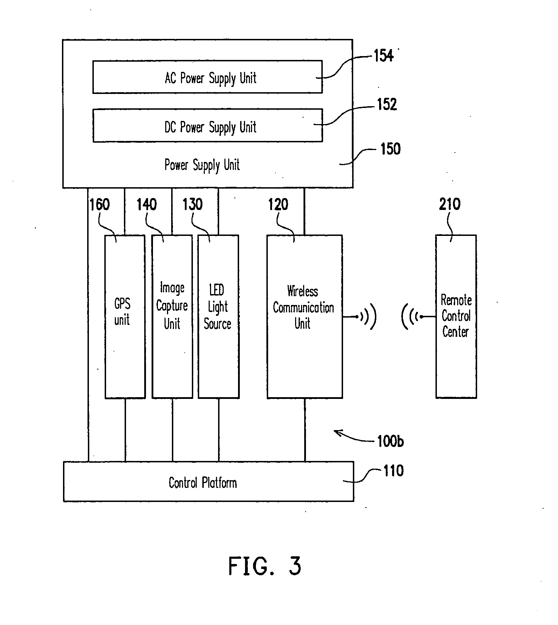

FIG. 3 is a schematic view of an illumination system according to a third embodiment of the present invention. Referring to FIG.3, the illumination system 100b of this embodiment is similar to the illumination system 100a in the second embodiment, except for the difference that: illumination system 100b further includes a GPS unit 160 electrically connected to the control platform 110, and the GPS unit carries a graphic information system (GIS). In this embodiment, the control platform 110 is adapted for enabling the wireless communication unit 120 to transmit a position information to a remote control center 210 according to the position information detected by the GPS unit 160.

For example, if the illumination system100b of this embodiment is applied to a street lamp, when the GPS unit 160 senses an abnormal position alternation which may be caused by theft, natural disasters such as mud flow or other reasons, the control platform 110 is adapted to enable the wireless communication unit 120 to transmit an alarm information and a position information to the remote control center 210, and enable the image capture unit 140 to capture image to survey the surroundings, such that the control staff at the remote control center 210 can take proper measures instantly according to the actual situation. Therefore, the illumination system100b of this embodiment also has other functions such as anti-theft and precaution to natural disaster.

In view of the above, the present invention adopts the control platform to integrate the wireless communication unit, the LED light source, and the image capture unit, such that the illumination system has multiple functions such as wireless communication, illumination, image capture, and precaution to natural disaster. Therefore, the illumination system of the present invention can bring different added values under different circumstances, thereby having a wide application range.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. An illumination system, comprising:
a wireless communication unit;
a light emitting diode (LED) light source;
an image capture unit; and
a control platform, electrically connected to the wireless communication unit, the LED light source, and the image capture unit.

2. The illumination system as claimed in claim 1, wherein the wireless communication unit comprises a 3 generation (3G) global system for mobile communications (GSM), a 3.5 generation (3.5G) global system for mobile communications (GSM), a 4 generation (4G) global system for mobile communications (GSM), a worldwide interoperability for microwave access (WiMAX), a personal handy-phone system (PHS), or an analog wireless transmission system.

3. The illumination system as claimed in claim 1, wherein the image capture unit comprises a charge coupled device (CCD) or a complementary metal-oxide semiconductor (CMOS) image sensor.

4. The illumination system as claimed in claim 1, wherein the control platform is adapted for enabling the LED light source to emit light, or enabling the image capture unit to capture images.

5. The illumination system as claimed in claim 1, wherein the control platform is adapted for enabling the wireless communication unit to transmit an image captured by the image capture unit to a remote control center.

6. The illumination system as claimed in claim 1, further comprising a power supply unit electrically connected to the image capture unit, the LED light source, the wireless communication unit, and the control platform.

7. The illumination system as claimed in claim 6, wherein the power supply unit comprises a DC power supply unit or an AC power supply unit.

8. The illumination system as claimed in claim 7, wherein the DC power supply unit comprises a solar cell.

9. The illumination system as claimed in claim 6, wherein the power supply unit comprises a DC power supply unit and an AC power supply unit.

10. The illumination system as claimed in claim 9, wherein the DC power supply unit comprises a solar cell.

11. The illumination system as claimed in claim 1, further comprising a global positioning system (GPS) unit electrically connected to the control platform.

12. The illumination system as claimed in claim 1, wherein the control platform is adapted for enabling the wireless communication unit to transmit a position information to a remote control center according to the position information detected by the GPS unit.
